# EUROPÄISCHE PATENTSCHRIFT

(11) **EP 0 877 126 B1**
(45) Veröffentlichungstag und Bekanntmachung des Hinweises auf die Patenterteilung: **12.05.2004**
(21) Anmeldenummer: 98105705.2
(22) Anmeldetag: 28.03.1998
(51) Int. Cl.: E03F 1/00, E03F 5/10

(54) **Versickerungsvorrichtung**
Infiltration device
Dispositif d'infiltration

(30) Priorität: 09.05.1997 DE 29708322 U
(43) Veröffentlichungstag der Anmeldung: 11.11.1998
(73) Patentinhaber: REHAU AG + Co, 95111 Rehau (DE)
(72) Erfinder: Kania, Guido, 95111 Rehau (DE); Müller, Stephan, 98663 Gompertshausen (DE)

(56) Entgegenhaltungen:
- DE-A- 2 727 955
- DE-A- 3 416 433
- DE-U- 29 516 580
- GB-A- 2 198 322
- US-A- 4 678 367

## Beschreibung

Die Erfindung betrifft eine Versickerungsvorrichtung für Niederschlagswasser, bestehend aus einem innerhalb eines Schachtes angeordneten Rohrstutzen mit einem Wasserzulauf, einem innerhalb des Schachtes angeordneten Wasserablauf und einem Wasserüberlauf, wobei die durch den Wasserablauf austretende Wassermenge durch ein Drosselelement regulierbar ist und wobei das durch das Drosselelement fließende Wasser durch eine Ablauföffnung im Schacht abfließen kann.

Eine gattungsgemäße Versickerungsvorrichtung ist eine Regenwasserversickerung über ein Mulden-Rigolen-System mit Anstauregulierung. Dabei ist die Mulden-Rigole beispielsweise parallel zur Straßenführung ausgerichtet und mit einem Vorflutanschluß versehen. Das Anstauregelorgan des bekannten Standes der Technik ist in einem Schacht installiert und besitzt einen Zulauf, einen Überlauf und einen Drehkolben, der je nach Winkelstellung einen veränderlichen Abflußquerschnitt für den Regenwasserablauf freigibt. Dieser bewegliche Drehkolben hat sich im praktischen Betrieb als nachteilig herausgestellt, da durch im Abflußwasser befindliche Ablagerungen in relativ kurzer Zeit ein Festbacken des Drehkolbens erfolgt und dadurch eine Störung der Gesamtanlage eintritt. Darüber hinaus läßt sich die tatsächlich freigegebene Abschlußöffnung für das Überlaufwasser nicht präzise ermitteln, so daß eine genaue Bemessung der Abflußleistung nicht möglich ist Weiterhin ist ein individuelles Aufmaß dieses Formteils für jeden Einbaufall i. d. R. erforderlich. Ein Spülen des gesamten Schachtsystems, das zu Reinigungszwecken in mehr oder weniger großen Abständen erforderlich ist, ist nur durch vollkommene Öffnung und anschließendes Neuregulieren des Drehkolbens zu realisieren.

Aus der US-A-4678367 ist eine Vorrichtung zur Regulierung einer Untergrundbewässerung bzw. Drainage bekannt, welche für Niederschlagswasser geeignet ist. Diese Vorrichtung besteht aus einem Rohrstutzen mit einem Wasserzulauf, der außerhalb des Schachtes angeordnet ist und einem außerhalb des Schachtes angeordneten Wasserablauf, sowie einen Wasserüberlauf. Die durch den Wasserablauf austretende Wassermenge soll durch ein Drosselelement regulierbar sein, wobei das durch das Drosselelement fließende Wasser durch eine Ablauföffnung ins Freie gelangen kann. In der US-A-4678367 soll das Drosselelement ein als Blenden-Schieber-System ausgebildeter Drosselverschluss sein, dessen Bewegungsmechanik im Inneren des Schachtes angeordnet ist. Mittels der Bewegungsmechanik lässt sich die Bewässerung des Untergrundes steuern. Mit der oberen Regulierungseinheit kann der Wasserdruck eingestellt werden, der für die Wasserzufuhr in der Bewässerungszone erforderlich ist. Mit der unteren Reguliereinheit ist, falls erforderlich, ein ungehinderter Durchfluss des Wassers möglich. Die Bewegungsmechanik ist nicht fest mit den Reguliereinheiten verbunden, sondern wird je nach Erfordernis entweder in die untere Reguliereinheit oder in die obere Reguliereinheit eingehakt.

Weiterhin ist aus der CH-A-677392 eine Versickerungsvorrichtung für Niederschlagswasser bekannt, bestehend aus einem innerhalb eines Schachtes angeordneten Rohrstutzen mit einem Wasserzulauf, einem Wasserüberlauf, wobei das im Schacht befindliche Niederschlagswasser durch eine Ablauföffnung im Schacht ins Freie gelangt.

Aus der DE-U 295 16 580.4 ist eine andere Versickerungsvorrichtung bekannt, die anstelle eines Drehkolbens als Drosselorgan eine als Lochblende ausgebildete Kappe aufweist, welche auf dem freien Ende des den Wasserablauf bildenden Rohrstutzens lösbar befestigt ist.

Dieses System funktioniert zwar technisch einwandfrei, jedoch ist die Abnahme der eingesetzten Lochblende und ihr Ersatz durch eine andere Lochblende mit geänderten Durchflußöffnungen aufwendig.

Hier setzt die Erfindung ein, die es sich zur Aufgabe gestellt hat, die Nachteile des Standes der Technik zu vermeiden und ein regulierbares Drosselabflußsystem anzugeben, dessen Abflußquerschnitt kontinuierlich oder in frei wählbaren Schritten regulierbar ist. Erfindungsgemäß wird dies durch das kennzeichnende Merkmal des Anspruches 1 gelöst. Weitere vorteilhalte Ausgestaltungen sind den unter ansprüchen ausgeführt.

Es hat sich hierbei als vorteilhaft erwiesen, daß der Blenden-Schieber des Drossetelementes durch die Bewegungsmechanik über den gesamten freizugebenden Querschnitt verfahrbar ist. Dieser Blenden-Schieber ist erfindungsgemäß ein mit einer Öffnung versehenes, flächiges Bauelement, welches in einer Führungskulisse verschieblich gelagert ist. Vorteilhaft ist diese Führungskulisse aus zwei flächigen Bauteilen aufgebaut, welche an ihren zwei Längsrändem und am unteren Querrand flüssigkeitsdicht miteinander verbunden sind. Es hat sich schließlich als zweckmäßig erwiesen, daß die Öffnung der Schlitzblende eiförmig mit nach oben zur Querwand gerichteten Spitze ausgestaltet ist.

Das erfindungsgemäße Drosselabflußsystem basiert auf dem Aufbau des Standes der Technik und besteht aus einem Schachtrohr, in welches der Wasserzulauf aus dem angeschlossenen Mulden-Rigolen-System mündet. Dieser Wasserzulauf ist flüssigkeitsdicht mit dem Drosselschacht verbunden. Diese Abflußdrossel, vorzugsweise im Inneren des Schachtes angeordnet, besitzt einen Zulauf, einen Überlauf und einen querschnittsreduzierbaren Ablauf. Dieser querschnittsreduzierbare Ablauf wird erfindungsgemäß durch den als Blenden-Schieber ausgeführten Drosselverschluß gebildet.

Der besondere Vorteil der Erfindung gegenüber dem Stand der Technik wird darin gesehen, daß der Blenden-Schieber über die Bewegungsmechanik stufenlos verstellbar oder auswechselbar ist.

Die jeweils freigegebene Querschnittsfläche an der Drossel kann an der Bewegungsmechanik definiert festgestellt werden. Damit kann die Abflußspende, d. h., die durch den freien Durchgang der Drossel fließende Wassermenge pro Zeiteinheit, einwandfrei festgelegt werden. Die Feinregulierung der Abflußspende kann auch dadurch erfolgen, daß die Bewegungsmechanik als nicht steigende Spindel ausgebildet ist, die über eine Vorrichtung stufenlos verstellt werden kann. Es besteht auch die Möglichkeit, daß der Drosselverschluß über einen Rastmechanismus in definierten Stufen eingestellt wird und jeweils durch ein Schloß oder ein ähnliches Sperrorgan gegen unbefugtes Verstellen gesichert ist. Ein weiterer Vorteil des erfindungsgemäßen Blenden-Schiebers wird darin gesehen, daß die Reibungsflächen zwischen dem Blenden-Schieber und der Führungskulisse gering gehalten sind. Dadurch wird ein verschmutzungsbedingtes Festsetzen des gesamten Blenden-Schieber-Systems vermieden. Wird z. B. der Blenden-Schieber mit dem vollen Querschnitt seiner Öffnung in die lichte Öffnung des Wasserablaufs bzw. Wasserzulaufs geschoben, so wird sämtlicher eingedrungen Schmutz durch das fließende Wasser freigespült. Bei dieser Stellung ist außerdem eine Spülung der an die Versickerungsvorrichtung angeschlossenen Sickerleitung problemlos möglich.

Die erfindungsgemäß eiförmige Gestaltung der Öffnung des Blenden-Schiebers ermöglicht ein einwandfreies Dosieren des Volumenstroms.

In der Zeichnung sind Ausführungsbeispiele der erfindungsgemäßen Versickerungsvorrichtung schematisch dargestellt; es zeigt:
- Fig. 1: einen Querschnitt durch einen Schacht mit der Versickerungsvorrichtung.
- Fig. 2: die Schlitzblende mit Führungskulisse in Draufsicht.
- Fig. 3: einen Querschnitt durch die Darstellung in Fig. 2 längs der Linie A-A.

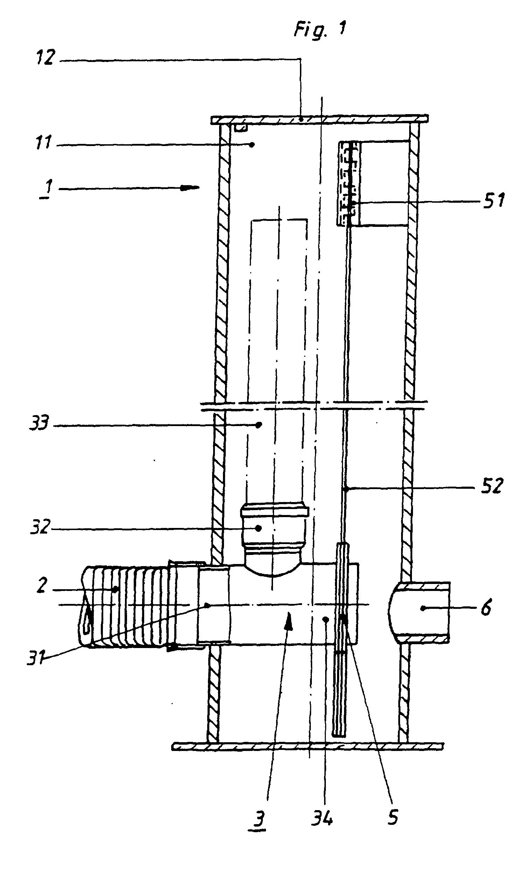

Fig. 1 zeigt den Schacht 1 mit dem verbundenen Sickerleitungsrohr 2, das seinerseits mit dem hier nicht gezeigten Mulden-Rigolen-System verbunden ist. Das Sickerleitungsrohr 2 kann mit der Abflußdrossel 3 flüssigkeitsdicht verbunden sein. Die Abflußdrossel 3 besitzt den Anschlußstutzen 31 für das Sickerleitungsrohr 2, den Wasserüberlauf 32, der durch ein eingestecktes Rohr 33 - strichliert dargestellt - beliebig nach oben in das Lumen 11 des Schachtes 1 verlängerbar ist.

An dem vom Sickerleitungsrohr 2 abgewandten freien Ende.34 besitzt die Abflußdrossel 3 das Drosselelement 5. Das Drosselelement 5 ist durch eine Bewegungsmechanik 51, welche über eine Betätigungsstange, Spindel oder ein ähnliches Betätigungselement 52 mit dem Drosselelement 5 verbunden ist, in der gezeigten Darstellung vertikal verfahrbar

Der Schacht 1 ist mit dem Schachtdeckel 12 verschließbar. Im unteren Abschnitt des Schachtes ist schließlich noch die Wasserablauföffnung 6 angeordnet, durch die das aus dem Drosselelement 5 austretende Wasser den Schacht verlassen kann. Die Wasserablauföffnung 6 kann als Bogen ausgebildet sein, wobei die Wassereintrittsöffnung zum Boden des Schachtes 1 gerichtet ist. Dadurch wird verhindert, daß im Störungsfall in den Schacht 1 eingetretene schädliche Flüssigkeiten, z. B. Leichtflüssigkeiten in die Vorflut abgegeben werden bzw. in die Rigole eindringen können.

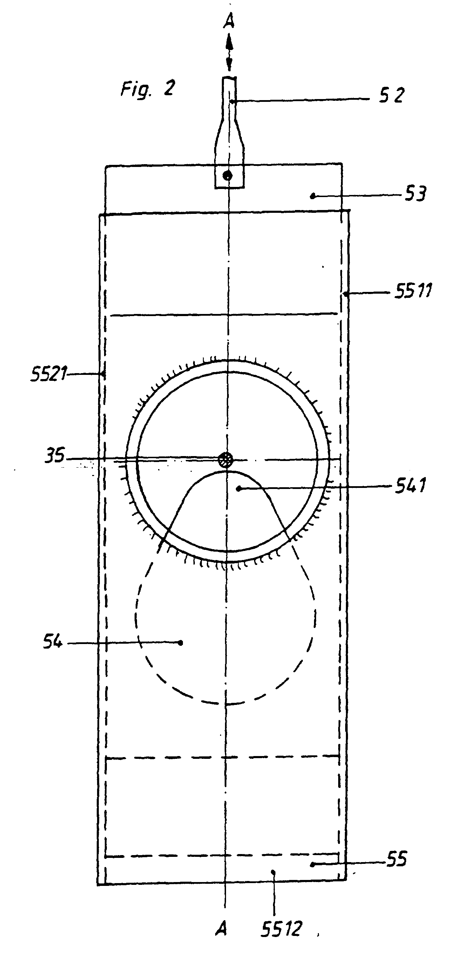

Fig. 2 zeigt den Blenden-Schieber 53 des Drosselelementes 5 mit der Führungskulisse 55 in Draufsicht. Der Blenden-Schieber 53 ist in einer Stellung gezeigt, in der die eiförmige Öffnung 54 mit ihrer Spitze 541 in den lichten Querschnitt 35 der Abflußdrossel 3 eintaucht. In dieser Stellung kann nur Wasser über die Spitze 541 aus der Abflußdrossel 3 in das Lumen 11 des Schachtes 1 eintreten.

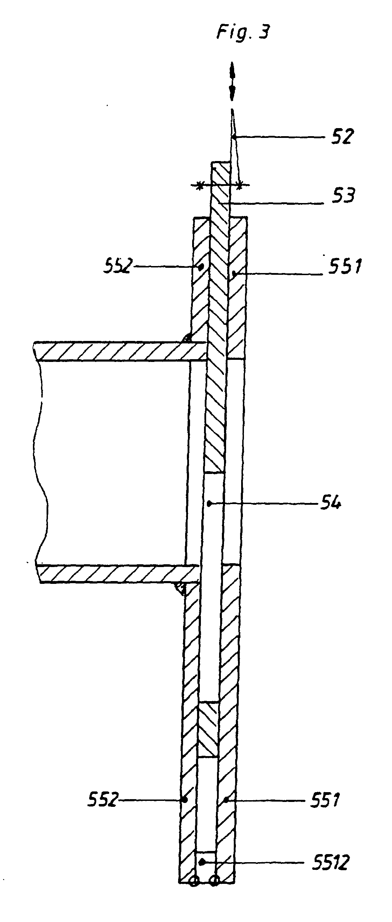

Die Führungskulisse 55 besteht aus zwei flächigen Bauteilen 551, 552 (Fig. 3), welche an ihren beiden Längsrändem 5511, 5521 und dem unteren Querrand 5512 flüssigkeitsdicht miteinander verbunden sind.

Fig. 3 zeigt den Querschnitt durch die Darstellung in Fig. 2 längs der Linie A-A. Gleiche Bauteile haben hier gleiche Bezeichnungen erhalten.

## Patentansprüche

1. Versickerungsvorrichtung für Niederschlagswasser, bestehend aus einem Schacht (1), einem Schachtdeckel (12), einem innerhalb des Schachtes (1) angeordneten Rohrstutzen (3) mit einem Wasserzulauf (31), einem innerhalb des Schachtes (1) angeordneten Wasserablauf (35) und einem Wasserüberlauf (32), wobei die bei Gebrauch durch den Wasserablauf (35) austretende Wassermenge durch ein Drosselelement (5) regulierbar ist und wobei das bei Gebrauch durch das Drosselelement (5) fließende Wasser durch eine Ablauföffnung (6) im Schacht (1) ins Freie gelangt, wobei das Drosselelement (5) ein als Blenden-Schieber-System ausgebildeter Drosselverschluss ist, dessen Bewegungsmechanik (51, 52) unterhalb des Schachtdeckels (12) im Inneren des Schachtes (1) angeordnet ist,
**dadurch gekennzeichnet,**
**dass** die Öffnung (54) des Blenden-Schiebers (53) eiförmig mit nach oben gerichteter Spitze (541) ausgebildet ist.

2. Versickerungsvorrichtung nach Anspruch 1, **dadurch gekennzeichnet, dass** der Blenden-Schieber (53) des Drosselelementes (5) durch die Bewegungsmechanik (51, 52) über den gesamten lichten Querschnitt des Wasserablaufes (35) verfahrbar ist.

3. Versickerungsvorrichtung nach Anspruch 1, **dadurch gekennzeichnet, dass** der Blenden-Schieber (53) ein mit einer Öffnung (54) versehenes, flächiges Bauelement ist, welches in einer Führungskulisse (55) verschieblich gelagert ist.

4. Versickerungsvorrichtung nach Anspruch 3, **dadurch gekennzeichnet, dass** die Führungskulisse (55) aus 2 flächigen Bauteilen (551, 552) besteht, welche an ihren zwei Längsrändern (5511, 5521) und am unteren Querrand (5512) flüssigkeitsdicht miteinander verbunden sind.

5. Versickerungsvorrichtung nach Anspruch 1, **dadurch gekennzeichnet, dass** der Blenden-Schieber (53) ausflussseitig innerhalb des Schachtes (1) angeordnet ist.

6. Versickerungsvorrichtung nach Anspruch 1, **dadurch gekennzeichnet, dass** der Wasserüberlauf (32) außerhalb des Schachtes (1) angeordnet ist.

7. Versickerungsvorrichtung nach Anspruch 1, **dadurch gekennzeichnet, dass** die Wasserablauföffnung (6) als Tauchbogen ausgebildet ist, dessen Wassereintrittsöffnung zum Boden des Schachtes (1) gerichtet ist.

8. Versickerungsvorrichtung nach Anspruch 1, **dadurch gekennzeichnet, dass** das Drosselelement (5) an dem vom Sickerleitungsrohr (2) abgewandten freien Ende (34) der Abflussdrossel (3) angeordnet ist.

## Claims

1. Seepage device for rainwater consisting of a shaft (1), a shaft cover (12), a pipe socket (3) located inside the shaft (1) with a water inlet (31), a water outlet (35) located inside the shaft (1) and a water overflow (32), in which the volume of water discharged through the water outlet (35) during usage can be regulated by a throttle element (5) and in which the water flowing through the throttle element (5) during usage escapes through an outlet opening (6) in the shaft (1) to the exterior. The throttle element (5) is a throttle seal executed as an aperture and slide system whose moving mechanism (51, 52) is located beneath the shaft cover (12) inside the shaft (1),
**characterised by**:
The opening (54) of the aperture slide (53) is executed as an ovoid with the tip (541) pointing upwards.

2. Seepage device according to Claim 1, **characterised by**: The aperture slide (53) of the throttle element (5) can be moved by the movement mechanism (51, 52) over the entire overall cross-section of the water outlet (35).

3. Seepage device according to Claim 1, **characterised by**: The aperture slide (53) is a flat component with an opening (54) which is held in guide gate (55) and is capable of sliding.

4. Seepage device according to Claim 3, **characterised by**: The guide gate (55) consists of 2 flat components (551, 552) which are connected to each other in a watertight manner at their two long edges (5511, 5521) and at their lower transverse edges (5512).

5. Seepage device according to Claim 1, **characterised by**: The aperture slide (53) is located inside the shaft (1) at the outlet side.

6. Seepage device according to Claim 1, **characterised by**: The water overflow (32) is located outside the shaft (1).

7. Seepage device according to Claim 1, **characterised by**: The water outlet opening (6) is executed as an immersed bend whose water inlet opening faces the floor of the shaft (1).

8. Seepage device according to Claim 1, **characterised by**: The throttle element (5) is located at the free end (34) of the outlet throttle (3) facing away from the seepage pipe (2).

## Revendications

1. Dispositif d'infiltration pour eau pluviale comportant un regard (1), un couvercle (12), un manchon de canalisation (3) placé à l'intérieur du regard (1) avec une arrivée d'eau (31 ), une évacuation d'eau (35) placée à l'intérieur du regard (1) et un trop-plein (32), la quantité d'eau se déversant par l'évacuation d'eau (35) en fonctionnement pouvant être régulée par un élément réducteur (5) et l'eau passant au travers de l'élément réducteur (5) en fonctionnement débouchant à l'extérieur par une ouverture d'évacuation (6) pratiquée dans le regard (1), l'élément réducteur (5) étant un réducteur de fermeture conçu comme un système de tiroir d'obturation dont le mécanisme de mouvement (51, 52) est placé sous le couvercle du regard (12) à l'intérieur du regard (1)
**caractérisé en ce que**,
l'ouverture (54) du tiroir d'obturation (53) a la forme d'un oeuf dont la pointe est dirigée vers le haut (541).

2. Dispositif d'infiltration selon revendication 1 **caractérisé en ce que** le tiroir d'obturation (53) de l'élément réducteur (5) peut être déplacé sur toute la section de la lumière de l'évacuation d'eau (35) par l'intermédiaire du mécanisme de mouvement (51, 52).

3. Dispositif d'infiltration selon revendication 1 **caractérisé en ce que** le tiroir d'obturation (53) équipé d'une ouverture (54) est un composant plat pouvant être manoeuvré à l'intérieur d'une coulisse de guidage (55).

4. Dispositif d'infiltration selon revendication 3 **caractérisé en ce que** la coulisse de guidage (55) est constituée de deux éléments plans (551, 552) lesquels forment une liaison jointive étanche à l'eau sur leurs bords longitudinaux (5511, 5521) et sur le bord transversal inférieur (5512).

5. Dispositif d'infiltration selon revendication 1 **caractérisé en ce que** le tiroir d'obturation (53) est placé du côté de l'écoulement à l'intérieur du regard (1).

6. Dispositif d'infiltration selon revendication 1 **caractérisé en ce que** le trop-plein (32) est placé en dehors du regard (1).

7. Dispositif d'infiltration selon revendication 1 **caractérisé en ce que** l'ouverture d'évacuation d'eau (6) a la forme d'un coude plongeur dont l'ouverture d'entrée est dirigée vers le fond du regard (1).

8. Dispositif d'infiltration selon revendication 1, **caractérisé en ce que** l'élément réducteur (5) est placé du côté libre (34) du régulateur de débit (3) à l'opposé du conduit de drainage (2).
